# EUROPEAN PATENT APPLICATION

(11) **EP 4 542 025 A1**
(43) Date of publication of application: **23.04.2025**
(21) Application number: 23383068.6
(22) Date of filing: 19.10.2023
(51) Int. Cl.: F03D 7/02, F03D 17/00

(54) **METHOD FOR OPERATING A WIND TURBINE AND WIND TURBINE**

(71) Applicant: Nordex Energy Spain, S.A.U., 31395 Barasoain (Navarra) (ES); Nordex Energy SE & Co. KG, 22419 Hamburg (DE)
(72) Inventor: Gellermann, Jan, 22419 Hamburg (DE); Gil, Pablo, 31395 BARASOAIN (ES); Manitz, Jan Erik, 22419 Hamburg (DE); Harms, Ulrich, 22419 Hamburg (DE); Erdogan, Burak, 22419 Hamburg (DE)
(74) Representative: Völkl Siebenson Patentanwälte - Partnerschaft mbB

(57) **Abstract**

According to an embodiment, the method is for operating a wind turbine (100) having a rotatable component (1 to 4) and N drives for rotating the rotatable component by exerting torques, wherein N ≥ 2. The method comprises a step of providing first information (I1) which is representative of whether one of the drives is damaged. If this is the case, a first measure (M1) is executed. The first measure is configured to cause a change of the operation of the wind turbine from a first operation mode in which the N drives are used to control the position of the rotatable component into a second operation mode in which the damaged drive is permanently disabled and only the remaining N-1 drives are used to control the position of the rotatable component.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation. Failure of the system for rotating these components increases the downtime of the wind turbine and reduces its annual energy production (AEP).

One object to be achieved is to provide a method which contributes to an efficient operation of the wind turbine, particularly with a low downtime or a high AEP, respectively. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and N drives for rotating the rotatable component by exerting torques. N is an integer greater or equal to 2. The method comprises a step of providing first information which is representative of whether one, e.g. exactly one, of the drives is damaged. If this is the case, i.e. if the first information is representative of one, particularly exactly one drive to be damaged, a first measure is executed. The first measure is configured to cause a change of the operation of the wind turbine from a first operation mode in which the N drives are used to control the position of the rotatable component into a second operation mode in which the damaged drive is permanently disabled and only the remaining N-1 drives are used to control the position of the rotatable component.

Usually, when one of the drives of a wind turbine is damaged, the operation of the wind turbine is stopped for maintenance of the damaged drive. During this downtime, no energy is produced. The present invention is, inter alia, based on the idea that this downtime can be avoided when the wind turbine is continued to be operated with N-1 drives instead of N drives and with the damaged drive being disabled, i.e. not being operated anymore. The damaged drive can then be repaired during a general maintenance of the wind turbine. However, there is no longer any need for extra maintenance due to the damaged drive.

The method specified herein is, in particular, a computer-implemented method, i.e. is performed with the help of a computer or a processor.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively.

Furthermore, here and in the following, information is, in particular, electronic information, like electronic data.

For example, the number N of drives assigned to the rotatable component is 2 or 4 or 6. The drives may each comprise an electric motor. Moreover, each drive may comprise a gearbox and a pinion. The electric motors apply an input rotational speed and an input torque to the gearbox, which is thereby transformed to an output rotational speed and an output torque and is applied to the pinion. By way of example, the transmission ratio between the input rotational speed and the output rotational speed of the gearbox of each drive is at least 100 or at least 1000. That is, the electric motor, on one side of the gearbox, rotates at least 100 or at least 1000 times faster than the pinion on the other side of the gearbox.

The drives may be attached to the rotatable component so that they rotate together with the rotatable component. For example, the drives then mesh with and exert torques to a non-rotatable element which in turn may cause the rotation of the rotatable component. Alternatively, the drives are rotationally fixed and do not rotate together with the rotatable component. The drives may then mesh with the rotatable component and may exert torques on it, which can cause its rotation.

When operated in the first operation mode, which is, e.g., the nominal operation mode, the wind turbine comprises and uses N drives for rotating the rotatable component and/or for keeping the rotatable component in position. When operated in the second operation mode, which is, e.g., an auxiliary operation mode, the wind turbine only uses N-1 drives for rotating the rotatable component and/or for keeping the rotatable component in position. Preferably, the first measure is automatically executed when the first information is representative of one of the drives being damaged.

If the first information is representative of that two or more drives are damaged, the second operation mode may be a mode in which only the most damaged drive is permanently disabled and the remaining N-1 drives are used to control the position of the rotatable component. Alternatively, if the first information is representative of that two or more drives are damaged, an alternative measure may be executed. The alternative measure is, for example, configured to cause a shutdown of the wind turbine. Alternatively, however, the alternative measure may be configured to cause a change of the operation of the wind turbine from the first operation mode into a third operation mode in which two or more damaged drives are permanently disabled and only the remaining drives are used to control the position of the rotatable component.

According to a further embodiment, if the first measure is executed, the method further comprises a step of (automatically) changing a setpoint for the wind turbine. The setpoint is, for example, a rotor speed setpoint and/or a generator power setpoint.

When a step is executed if the first measure is executed, this herein means that the respective step is executed in addition to the first measure. It may be executed before, simultaneously with or after execution of the first measure.

Furthermore, a setpoint herein defines a certain target (value) to be achieved when operating the wind turbine. For example, the rotor speed setpoint is the target value of the rotational speed of the rotor of the wind turbine or the maximum allowed rotational speed. The generator power setpoint may be the target value of the power generated by the generator of the wind turbine or the maximum allowed power generated by the generator. The generator power and the rotor speed are correlated via the gearbox ratio, for example.

For example, when the rotational speed of the rotor deviates from or exceeds the rotor speed setpoint, pitch angles of the rotor blades are adjusted in order to keep the rotational speed of the rotor at or below the rotor speed setpoint. When the power generated by the generator deviates from or exceeds the generator power setpoint, a counter torque on the load side may be adjusted in order to keep the generated power at or below the generator power setpoint.

By way of example, the rotor speed setpoint and/or the generator power setpoint are reduced if the first measure is executed. For example, the rotor speed setpoint and/or the generator power setpoint are changed by at least 10% or at least 25% or at least 50% from the value used for the first operation mode.

According to a further embodiment, if the first measure is executed, the method further comprises a step of (automatically) changing a maximum allowed wind speed. For example, when the wind speed, which may be obtained by measurements, exceeds the maximum allowed wind speed, the wind turbine is shut down. For example, the maximum allowed wind speed is changed by at least 10% or at least 25% or at least 50% from the value used for the first operation mode. The maximum allowed wind speed may be reduced.

According to a further embodiment, if the first measure is executed, the method further comprises a step of (automatically) changing a maximum allowed external torque. The external torque is a torque acting on the rotatable component, for example induced by the wind acting on the wind turbine and/or induced by vibrations of the rotatable component, for example resulting from the rotation of the rotor of the wind turbine and/or resulting from changing wind speeds and/or resulting from tower movement. The external torque is, in particular, a torque which is not induced by the drives but against which the drives have to fight. For example, the maximum allowed external torque is changed by at least 10% or at least 25% or at least 50% from the value used for the first operation mode. The maximum allowed external torque may be reduced.

According to a further embodiment, if the first measure is executed, the method further comprises a step of (automatically) changing a remaining operation time of the wind turbine. The remaining operation time is, in particular, the time for which the wind turbine is planned to be further operated before maintenance. For example, the remaining operation time is changed by at least 10% or at least 25% or at least 50% from the value used for the first operation mode. The remaining operation time may be reduced.

According to a further embodiment, M power modes for the operation of the wind turbine are available in the first operation mode, wherein M ≥ 2, e.g. M = 2 or M ≥ 3 or M ≥ 4. A power mode is a certain setting of the wind turbine which defines the generated power depending on the wind speed at the rotor. For different power modes, different electric powers are generated for the same wind speed. A power mode comprises, for example, as certain setting of the rotor speed setpoint and/or the generator power setpoint. A power mode is a certain combination of the rotor speed setpoint and the generator power setpoint and, optionally, of a maximum allowed pitch angle of the rotor blades.

For example, in the second operation mode, less power modes for the operation of the wind turbine are available than in the first operation mode. By way of example, if the first measure is executed, one or more power modes are disabled. Disabling a power mode means that this power mode cannot be set/selected anymore. For instance, at least the power mode which provides the highest power at a certain wind speed is disabled in the second operation mode.

According to a further embodiment, if the first measure is executed, the method further comprises a step of (automatically) changing a power mode in which the wind turbine is to be operated. For example, it is changed to a power mode in which less power is generated than in the first operation mode. Particularly, it is changed to a power mode which induces less torque on the drives.

According to a further embodiment, the first measure is configured to cause an automatic change from the first to the second operation mode. That is, when the wind turbine is actually operated and the first measure is executed, the operation of the wind turbine automatically changes from the first operation mode to the second operation mode, i.e. without human action. By way of example, the first measure comprises a change of a setting in a control system of the wind turbine. The change of the setting, in turn, may result in the damaged drive no longer being provided with electric control signals. For example, changing the setting in the control system results in that the control system ignores the damaged drive. The control system then operates, for example, as if only N-1 drives were available for rotating the rotatable component.

According to a further embodiment, the first measure is configured to indicate to an operator that the operation of the wind turbine is to be changed from the first to the second operation mode. For example, the first measure comprises the generation of an output signal. When the output signal is received by a warning device, like a display or a loudspeaker, the warning device generates a noticeable warning signal, like a visual or acoustic warning signal. When the operator notices this warning signal, he/she knows that one of the drives is damaged and that the operation mode should now be (manually) changed.

According to a further embodiment, the first measure is configured to disable a power supply of the damaged drive. For example, IGBTs used for operating the damaged drive are not energized anymore. For example, the first measure comprises the generation of an output signal which disables the energization of the IGBTs. A drive brake or motor brake, respectively, of the damaged drive may also be turned off such that it does not break the drive or motor.

According to a further embodiment, in the second operation mode, the damaged drive is kept at the same place as it would be in the first operation mode. In other words, the damaged drive is not physically dismounted or removed if the first information is representative of that the drive is damaged.

According to a further embodiment, the damaged drive is physically dismounted in the second operation mode. In other words, the damaged drive is removed if the first information is representative of that the drive is damaged.

According to a further embodiment, the method comprises a step of providing second information which is representative of whether an external torque acting on the rotatable component exceeds a maximum allowed external torque, i.e. a threshold. The second information may be determined depending on measurements. For example, the external torque may be measured with the help of a separate sensor of the wind turbine. Alternatively, the external torque can be determined from the sum of the electric currents with which the electric motors of the drives are actually operated. The sum is indicative of the sum of the torques which is provided by the drives and this, in turn, is indicative for the external torque.

According to a further embodiment, the maximum allowed external torque in the second operation mode is lower than the maximum allowed external torque in the first operation mode. For example, the maximum allowed external torque in the second operation mode is at least 10% or at least 25% or at least 50% lower than in the first operation mode.

According to a further embodiment, if the second information is representative of the external torque acting on the rotatable component to exceed the respective maximum allowed external torque, a second measure is executed. The second measure is configured to cause a change of an operation of the wind turbine such that the external torque acting on the rotatable component is reduced. The second measure may be executed automatically when the second information is representative of the external torque to exceed the respective maximum allowed external torque.

For example, providing the second information and executing the second measure is done while the wind turbine is operated in the first and/or the second operation mode. Particularly in the second operation mode, where less drives are used to keep the rotatable component in position or are used to change the position of the rotatable component, less external torque can be handled. For this purpose, it is useful to have a maximum allowed external torque which is lower than in the first operation mode and to have the second measure which helps to keep the external torque below the maximum allowed external torque.

According to a further embodiment, the second measure comprises changing the rotor speed setpoint and/or the generator power setpoint and/or the power mode. For example, executing the second measure comprises a reduction of the rotor speed setpoint and/or a reduction of the generated power setpoint and or/the change to a power mode which results in a lower external torque.

According to a further embodiment, the method further comprises a step in which third information is provided. The third information is representative of whether a wind speed at the wind turbine, particularly at the rotor thereof, exceeds a maximum allowed wind speed. The third information may be determined depending on measurements. For example, the wind speed is determined with the help of a special wind speed sensor. Alternatively, the wind speed may be determined from measurements of the pitch angles of the rotor blades and/or the rotational speed of the rotor and/or the power generated by the generator.

According to a further embodiment, if the third information is representative of a wind speed at the wind turbine to exceed the respective maximum allowed wind speed, a third measure is executed. The third measure is configured to cause a shutdown of the wind turbine.

Providing the third information and executing the third measure may be done while the wind turbine is operated in the first and/or the second operation mode. For example, the third measure is configured to cause an automatic shutdown of the wind turbine or to indicate to an operator that he/she should shut down the wind turbine.

According to a further embodiment, the first information is determined depending on measurements. For example, for determining the first information, at least one operation parameter of each drive is compared to a reference. If the operation parameter of a drive differs from the reference by more than a defined threshold, the first information is determined such that it is representative of that this drive is damaged.

The reference may be an operation parameter average averaged over two or more drives, i.e. the average of operation parameters of two or more drives. The defined threshold may be fixed or maybe variable. For example, the defined threshold is chosen to be between 1% and 50% or between 5% and 30% of the reference.

According to a further embodiment, the at least one operation parameter is the temperature of the electric motor of the respective drive. The temperature may be determined with the help of a temperature sensor assigned to the electric motor.

According to a further embodiment, the at least one operation parameter is the electric current with which the electric motor of the respective drive is operated.

According to a further embodiment, the at least one operation parameter is a torque of the respective drive, e.g. the input torque or the output torque of the gearbox of the drive.

According to a further embodiment, the method further comprises providing fourth information which is representative of a position setpoint of the rotatable component and a step of determining operating setpoints for the drives depending on the fourth information such that, when the drives are operated according to the operating setpoints, the drives bring or keep the rotatable component at the position setpoint by exerting torques. The position setpoint is the target value of the position of the rotatable component. The operating setpoint defines the target operation of a drive. An operating setpoint for a drive is, in particular, equivalent to control/operation information for the drive.

The position setpoint is, in particular, an angle between 0° and 360°. To bring or keep the rotatable component at the position setpoint means that the drives are operated such that the difference between the actual position of the rotatable component and the position setpoint is minimized (for example with the help of a negative feedback loop). In other words, the rotatable component is kept in or brought to a position which corresponds to the position setpoint.

According to a further embodiment, the method comprises a step of providing fifth information which is representative of the actual torque difference between the actual torques exerted by the drives. By way of example, the actual electric currents with which the electric motors are actually operated are determined and these currents are then stored in the fifth information. The actual electric currents may be determined from the PWM-signals transmitted to the drives by using a motor model. Indeed, the electric current is proportional to the torque so that the difference between the currents of the electric motors is representative of the difference between the torques. Alternatively, it is possible to measure the torques provided by the drives or the torque difference directly and to store these measurements in the fifth information.

According to a further embodiment, the method further comprises a step of providing sixth information which is representative of a torque difference setpoint between the torques exerted by the drives. The torque difference setpoint is, in particular, different from zero. The torque difference setpoint is the target value of the absolute value of the torque difference between the torques of two drives. In the case of more than two drives, the sixth information may be representative of several torque difference setpoints. For example, the torque difference setpoint for each drive then refers to the torque difference between the drive and a master drive.

According to a further embodiment, the operating setpoints are determined also depending on the fifth and the sixth information, namely by using a feedback loop, particularly a negative feedback loop, with the fifth and the sixth information as input information so that the difference between the torque difference setpoint and the actual torque difference is minimized. Particularly, the fifth and the sixth information are repeatedly or continuously provided and compared. Depending on this, the operating setpoints are repeatedly or continuously determined or adjusted, respectively, in order to make the actual torque difference to match the torque difference setpoint.

The provision of the fourth and/or the fifth and/or the sixth information as well as the determination of the operating setpoints is preferably done before and after execution of the first measure.

According to a further embodiment, the damaged drive is the master drive before execution of the first measure. "Master drive" means that the operating setpoints are determined such that, when the drives are operated according to the operating setpoints, the value of the torque exerted by the master drive is always greater than or at least equal to the value of the torque exerted by the one or more other drives. Particularly, the operating setpoints for the other drive(s) or the torques to be exerted by the other drives, respectively, are determined depending on the operating setpoint or the torque of the master drive.

"Value of the torque" may herein be the numeric value (real number) or the absolute value (magnitude) of the torque. The numerical value takes into account the sign so that a torque value of 0 Nm is larger than a torque value of -10 Nm, for example.

According to a further embodiment, if the first measure is executed, the method further comprises a step of setting another drive to be the master drive.

According to a further embodiment, the wind turbine is first operated in the first operation mode, i.e. N drives are used to keep the rotatable component in position or are used to change the position of the rotatable component by exerting torques. Particularly, for each drive, the integral/sum over the absolute values of the torques exerted by that drive, and summed over the operation time in the first operation mode, is greater than zero.

According to a further embodiment, after execution of the first measure, the wind turbine is operated in the second operation mode. That is, at some moment in time, the first information is representative of one drive to be damaged so that the first measure is executed and, accordingly, the operation of the wind turbine is changed from the first to the second operation mode in which N-1 drives are used to keep the rotatable component in position or are used to change the position of the rotatable component while the damage drive is permanently disabled. "Permanently disabled" means that the damaged drive is not provided with control signals and/or does not exert torque in any moment during operation in the second operation mode. For example, the wind turbine is operated in the second operation mode until maintenance. The operation time in the second operation mode may be at least one day or at least one week or at least one month. For example, the wind turbine is operated in the second operation mode at most three months or at most six months.

According to a further embodiment, the rotatable component is a component of a yaw system of the wind turbine. For example, the rotatable component is a nacelle of the wind turbine or a carrier for a nacelle or a yaw bearing.

According to a further embodiment, the rotatable component is a component of a pitch system of the wind turbine. For example, the rotatable component is a rotor blade of the wind turbine or a carrier for a rotor blade or a pitch bearing.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, PLC for short. Additionally, the control system may comprise one or more drive control modules which convert operating setpoints into actual electric control signals, e.g. PWM signals, with which drives are then controlled. The control system may be part of the wind turbine.

According to a further embodiment, the control system comprises means, for example sensors, with the help of which it can be determined whether a drive is damaged or not. For example, the control system comprises a temperature sensor and/or a current sensor for each drive.

Next, the wind turbine is specified.

According to an embodiment, the wind turbine comprises a rotatable component as well as N drives for rotating the rotatable component by exerting torques. N is an integer greater or equal to 2. Furthermore, the wind turbine comprises a control system according to any of the embodiments described herein. Thus, the wind turbine is, in particular, configured to execute the method according to any of the embodiments described herein. All features disclosed for the method are therefore also disclosed for the wind turbine and vice versa.

According to a further embodiment, the control system is signally connected to the drives in order to enable operation of the drives according to the operating setpoints generated by the control system.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figure 2 shows an exemplary embodiment of a yaw system in a perspective view,
Figure 3 shows an exemplary embodiment of a yaw system in a cross-sectional view,
Figures 4 and 7 show an exemplary embodiment of a yaw system in a top view,
Figures 5 and 8 show flowcharts of exemplary embodiments of the method for operating a wind turbine,
Figure 6 shows an exemplary embodiment of the control system,
Figure 9 shows a diagram illustrating different power modes of the wind turbine,
Figure 10 shows an exemplary embodiment of an operation of a drive control module.

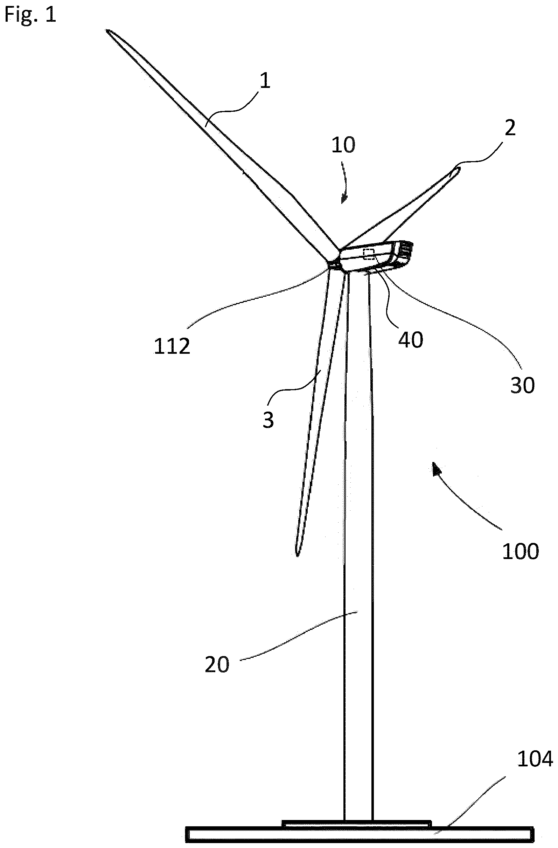

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

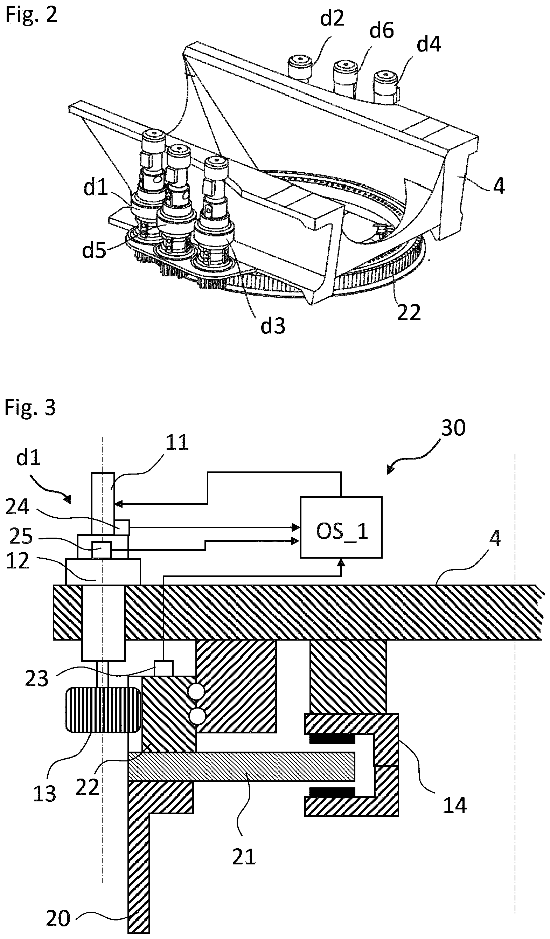

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Moreover, a brake disk 21 is mounted to the tower 20. A brake caliper 14 is fixed to the carrier 4 and can be used to stop rotation of the carrier 4 and/or to hold the carrier 4 in position. The brake disk 21 and the brake caliper 14 are optional.

Figure 3 shows only one of the drives, namely drive d1. All other drives may be formed identically. Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are sent to and processed by the control system 30. Moreover, another incremental encoder 24 is provided, with the help of which the actual rotational speed of the electric motor 11 of drive d1 is determinable. These measurements are also sent to and processed by the control system 30. Furthermore, a temperature sensor 25 is assigned to the electric motor 11 with the help of which the temperature of the electric motor 11 can be determined. Also the measurements of the temperature sensor 25 are sent to the control system 30 and are processed thereby. An individual incremental encoder 24 and an individual temperature sensor 25 may be provided for each drive d1 to d6.

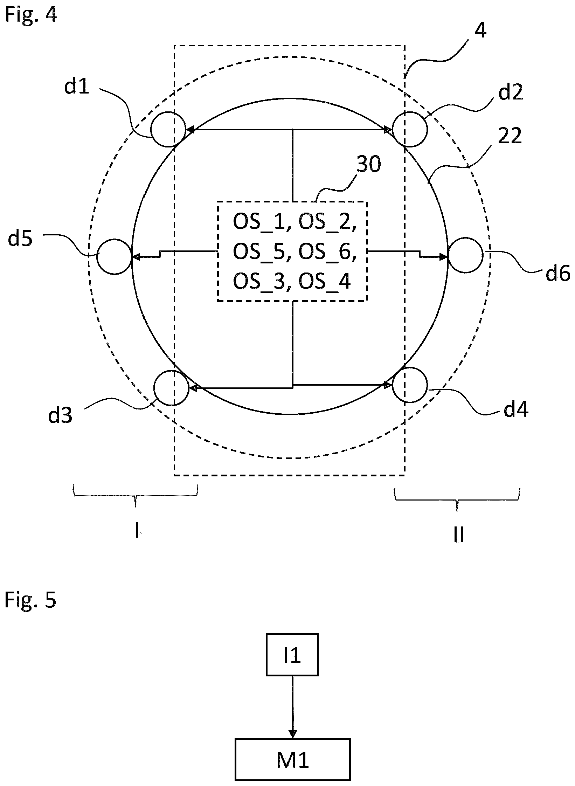

Figure 4 shows an exemplary embodiment of a yaw system, e.g. of the yaw system of figures 2 and 3, in top view. As can be seen here, all six drives d1 to d6, di for short, are operated according to corresponding operating setpoints OS_1 to OS_6, OS_i for short. The operating setpoints OS_i are determined by the control system 30. When the drives di are operated according to the operating setpoints OS_i, the carrier 4 is brought or kept in position at a position setpoint by exerting torques. The position setpoint may be determined by the control system 30 and may depend on different parameters, like the wind direction. Moreover, the operating setpoints OS_i may be configured such that different drives d1 to d6, di for short, exert different torques.

A possible way to operate the yaw system of figures 2 to 4 is to group the drives into two groups. The left group I or first group I, respectively, comprises drives d1, d3 and d5. The right group II or second group II, respectively, comprises drives d2, d4 and d6. Drive d1 is the master drive dm. The torques exerted by all other drives may be selected depending on the torque exerted by master drive d1. For example, drives d3 and d5 are operated such that they always exert the same torques as drive d1. The drives of the right group II, i.e. drives d2, d4 and d6, may be operated such that they always exert the same torques, but torques with values which are lower or at most the same as the value of the torque of drive d1. The torques of the left side and of the right side may differ from each other by a torque difference setpoint, e.g. of 10 Nm.

If one of the drives di becomes damaged during operation, the whole wind turbine 100 could be shut down. However, this is not efficient and reduces AEP. The method described herein contributes to a more efficient operation of the wind turbine.

Figure 5 shows a flowchart of a first exemplary embodiment of the method for operating a wind turbine, e.g. the wind turbine 100 described in connection with figures 1 to 4. The method comprises a step in which first information I1 is provided. The first information I1 is representative of whether one of the drives di is damaged. As an example, the first information I1 is representative of the drive d6 being damaged. Due to this, a first measure M1 is executed which is configured to cause a change of the operation of the wind turbine from a first operation mode, in which all six drives d1 to d6 are used to control the position of the rotatable component (see also figure 4) into a second operation mode in which the damaged drive d6 is permanently disabled and only the remaining five drives d1 to d5 are used to control the position of the carrier 4.

A further consequence of the first information I1 being representative of the drive d6 to be damaged is that the rotational speed setpoint of the wind turbine and/or the generator power setpoint of the wind turbine and/or the maximum allowed wind speed and/or the maximum allowed external torque and/or the remaining operation time of the wind turbine are changed, for example. This protects the remaining drives d1 to d5 from overload.

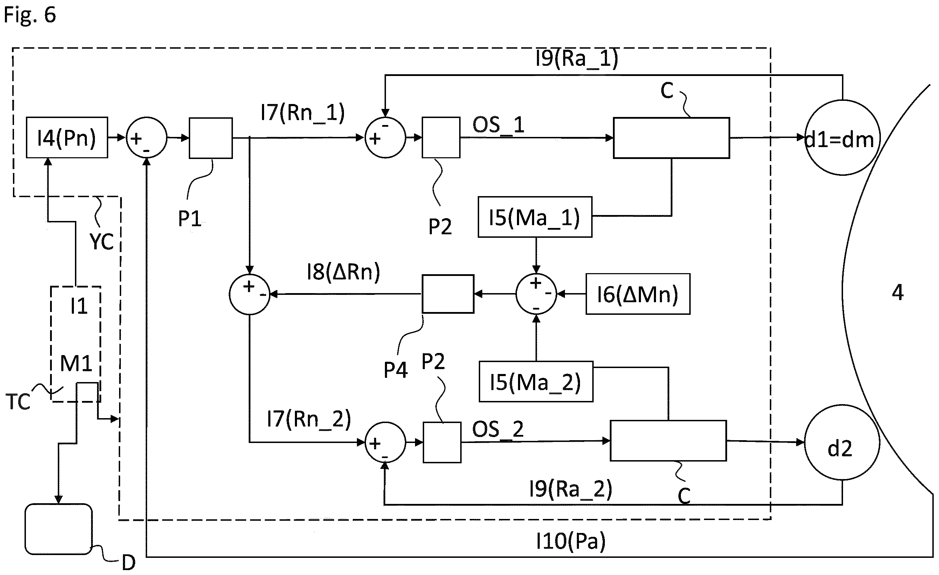

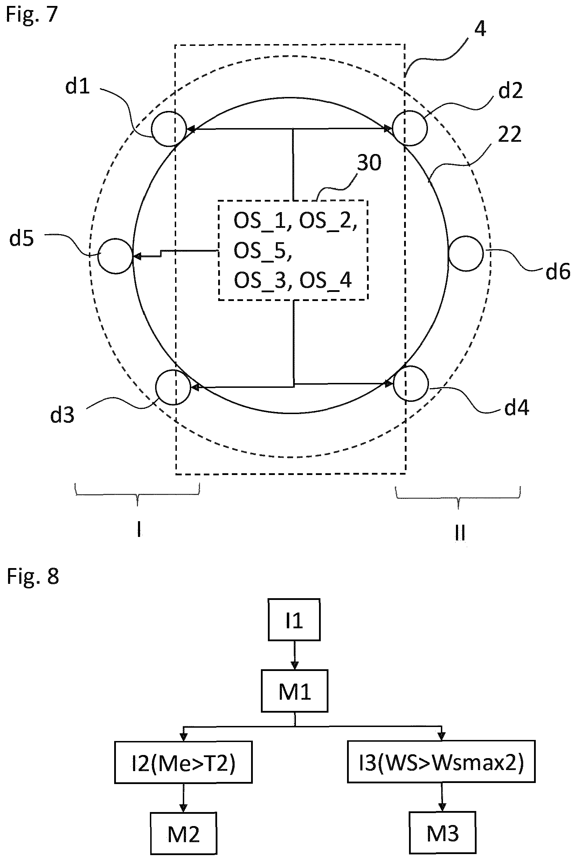

Figure 7 shows the view of figure 4 but now with the wind turbine being operated in the second operation mode. As can be seen here, operating setpoints OS_6 are no longer generated and, accordingly, the damaged drive d6 is no longer provided with control signals so that it is no longer used to bring the carrier 4 in position at the position setpoint. In contrast to what is shown in figure 6, the damaged drive d6 could also be physically dismounted.

Figure 8 shows a flowchart of a second exemplary embodiment of the method for operating a wind turbine, e.g. the wind turbine 100 described in connection with figures 1 to 4. In addition to what is shown in figure 5, the method comprises a step of providing second information I2 which is representative of whether the external torque Me acting on the carrier 4 exceeds a maximum allowed external torque T2.

If this is the case, a second measure M2 is executed which is configured to cause a change of operation of the wind turbine 100 such that the external torque Me acting on the carrier 4 is reduced. For example, the rotational speed setpoint and/or the generator power setpoint are reduced.

Moreover, a third information I3 is provided which is representative of whether a wind speed WS at the wind turbine 100 exceeds a maximum allowed wind speed WSmax2. If this is the case, a third measure M3 is executed, wherein the third measure M3 is configured to cause a shutdown of the wind turbine 100.

In the exemplary embodiment of figure 8, the steps of providing the second I2 and the third I3 information and, if applicable, the steps of executing the second M2 and the third M3 measure, are performed during operation of the wind turbine in the second operation mode. However, additionally or alternatively, these steps may be performed during operation in the first operation mode.

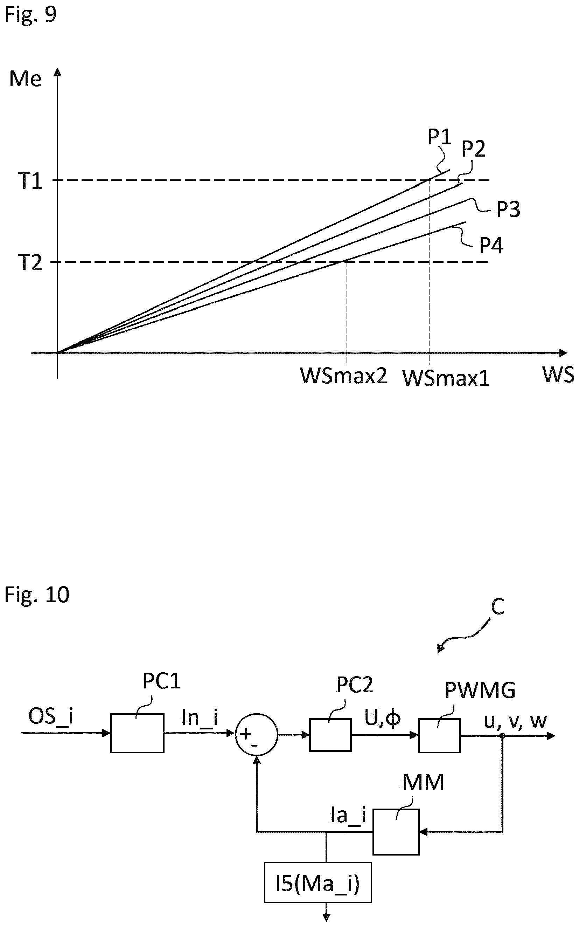

The maximum allowed wind speed WSmax1, WSmax2 may be determined depending on the maximum allowed external torque T1, T2. This is further explained on the basis of figure 9 which shows a coordinate system with the y-axis being representative of the external load Me acting on the carrier 4 and with the x-axis being representative of the wind speed WS at the rotor of the wind turbine. The different graphs P1 to P4 show different power modes in which the wind turbine 100 can be operated. Power mode P1 is, for example, the optimal power mode in which most electrical power at a certain wind speed WS is generated. However, as can be seen, power mode P1 also results in the largest external torque Me acting on the carrier 4, e.g. because vibrations are greatest in this power mode P1. Power mode P1 is, for example, the power mode which is used in the first operation mode.

When all six drives are available, i.e. when the wind turbine is operated in the first operation mode, they can handle larger external torques compared to the case where only five drives are used, i.e. when the rotatable component is operated in the second operation mode. Accordingly, two different maximum allowed external torques (thresholds) T1, T2 are defined, wherein the maximum allowed external torque T1 for the first operation mode is larger than the maximum allowed external torque T2 for the second operation mode.

By way of example, in the second operation mode, only power mode P4 is allowed for safety reasons. The maximum allowed external torque T2 of the second operation mode then results in a maximum allowed wind speed WSmax2. On the other hand, in the first operation mode, all operation modes P1 to P4 may be allowed and the maximum allowed external torque T1 of the first operation mode results in the maximum allowed wind speed WSmax1 being greater than the maximum allowed wind speed in the second operation mode.

Figure 6 shows an exemplary embodiment of the control system. This control system enables the operation of the drives di as described herein. For better illustration, only the drives d1 and d2 are shown.

The control system realizes a turbine control module TC and a yaw control module YC. Fourth information I4, which is representative of the position setpoint Pn of the carrier 4, is provided by the turbine control module TC and transmitted to the yaw control module YC. Depending on this fourth information I4 and tenth information I10, a position controller P1 determines seventh information I7. The seventh information I7 is representative of rotational speed setpoints Rn_1 to Rn_6, Rn_i for short, of the drives di. Depending on this seventh information I7, speed controllers P2 determine and generate operating setpoints OS_i, which are, e.g., torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 10.

The tenth information I10 is representative of the actual position Pa of the carrier 4 and can be determined, for example, with the help of the incremental encoder 23 as described in connection with figure 3. The tenth information I10 and the fourth information I4 are used in a negative feedback loop. From the deviation between the actual position Pa and the position setpoint Pn, the position controller P1 determines the seventh information I7.

Moreover, in order to achieve that the drives di rotate with the rotational speed setpoints Rn_i, ninth information I9 is provided which is representative of the actual rotational speeds Ra_i of the drives di. The ninth information I9 can be determined with the help of the incremental encoders 24, as explained in connection with figure 3. The ninth information I9 is used together with the seventh information I7 in negative feedback loops in order to minimize the respective differences between the rotational speed setpoints Rn_i and the actual rotational speeds Ra_i. The speed controllers P2 determine the operating setpoints OS_i depending on the deviation between the actual rotational speeds Ra_i and the rotational speed setpoints Rn_i.

As mentioned before, the drives d1, d2 may be operated such that they exert different torques. For this purpose, sixth information I6 is provided which is representative of a torque difference setpoint ΔMn. The torque difference setpoint ΔMn is compared to the actual torque difference ΔMa between the actual torques Ma_i of the drives. The actual torque difference ΔMa can be derived from fifth information I5 which is representative of the actual torques Ma_i of the drives di. The actual torques Ma_i of the drives di can be extracted from drive control modules C used for operating the drives by using the electric signals with which the motors are actually operated.

Depending on the fifth I5 and the sixth I6 information, eighth information I8 is determined using a negative feedback loop. The eighth information I8 is representative of an offset rotational speed ΔRn and is determined with the help of a tension controller P4 depending on the deviation between the actual torque difference and the torque difference setpoint ΔMn. For example, the offset rotational speed ΔRn is determined such that it increases with increasing difference between the torque difference setpoint ΔMn and the actual torque difference.

As can be seen in figure 6, the offset rotational speed ΔRn is subtracted from the rotational speed setpoint Rn_1 determined for drive d1 and the resulting value of the rotational speed is used as the rotational speed setpoint Rn_2 for the drive d2. In this way, a torque difference can be realized between drive d1 and drive d2 in which the value of the torque exerted by the drive d2 is always smaller or at most equal to the value of the torque exerted by drive d1. This is because the drive d1 is operated as the master drive dm.

The operation of the drives di according to the operating setpoints OS_i results in operation parameters for the drive di. From these operation parameters it can be determined whether one of the drives is damaged. Thus, the first information I1 can be determined. The first information is determined by the turbine control module TC. The turbine control module TC executes, for example, the steps described in connection with figure 5 or the steps described in connection with figure 8. Particularly, the turbine control module TC then executes the first measure M1. Here, the first measure M1 causes, inter alia, an automatic change of a parameter setting of the yaw control module YC such that the operation of the wind turbine 100 automatically changes from the first operation mode in which all six drives are used for controlling the position of the carrier 4 (see figure 4) to an operation in the second operation mode in which only five drives, namely drives d1 to d5, are further used for controlling the position of the carrier 4 and in which drive d6 is permanently disabled (see figure 7).

Furthermore, executing the first measure M1 results in a generation of an electric signal which is transmitted to a warning device D of the control system. The warning device D may be a display. The electric signal processed by the warning device D results in a warning signal which is noticeable by an operator. For example, the warning signal is a visual presentation on the display that drive d6 is damaged.

Figure 10 illustrates the operation of a drive control module C. A current converter PC1 determines a current setpoint In_i depending on the operating setpoint OS_i, which is the torque setpoint in this example. A further controller PC2 (e.g. a PI-controller) determines an absolute voltage value U and a phase shift ϕ depending on the current setpoint In_i and the actual current Ia_i. PWM-generators PWMG generate corresponding PWM signals with which IGBTs (not shown) are energized. The output thereof is three different phases u, v, w with which the drives di are then operated. Moreover, a motor model MM determines, depending on the phases u, v, w, the actual current Ia_i. The actual current Ia_i and the current setpoint In_i are used in a negative feedback loop to adapt the voltage value U and the phase shift ϕ. Furthermore, the fifth information I5 is determined depending on the determined actual current Ia_i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1: first rotor blade
- 2: second rotor blade
- 3: third rotor blade
- 4: nacelle carrier
- 10: rotor
- 11: electric motor
- 12: gearbox
- 13: pinion
- 14: break caliper
- 20: tower
- 21: brake disc
- 22: yaw bearing
- 23: incremental encoder
- 24: incremental encoder
- 25: temperature sensor
- 30: control system
- 40: nacelle
- 100: wind turbine
- 104: foundation
- 112: rotor hub

- I1: first information
- I2: second information
- I3: third information
- I4: fourth information
- I5: fifth information
- I6: sixth information
- I7: seventh information
- I8: eights information
- I9: ninth information
- I10: tenth information
- M1: first measure
- M2: second measure
- M3: third measure

- I: first group of drives
- II: second group of drives
- Pa: operation parameter average
- Me: external torque
- WS: wind speed
- T1: maximum allowed external torque
- T2: maximum allowed external torque
- WSmax1: maximum allowed wind speed
- WSmax2: maximum allowed wind speed
- P1: power mode
- P2: power mode
- P3: power mode
- P4: power mode

- TC: turbine control module
- YC: yaw control module
- D: warning device
- OS_i: operating setpoint
- di: drive
- dm: master drive
- Pn: position setpoint
- Pa: actual position
- ΔMn: torque difference setpoint
- ΔMa: actual torque difference
- Rn_i: rotational speed setpoint
- Ra_i: actual rotational speed
- Ma_i: actual torque
- ΔRn: rotational speed offset
- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model

## Claims

1. Method for operating a wind turbine (100) with a rotatable component (1 to 4) and N drives (di) for rotating the rotatable component (1 to 4) by exerting torques, wherein N ≥ 2 and wherein the method comprises
- providing first information (I1) which is representative of whether one of the drives (d6) is damaged, and, if this is the case,
- executing a first measure (M1), wherein
- the first measure (M1) is configured to cause a change of the operation of the wind turbine (100) from a first operation mode in which the N drives are used to control the position of the rotatable component (1 to 4) into a second operation mode in which the damaged drive (d6) is permanently disabled and only the remaining N-1 drives are used to control the position of the rotatable component (1 to 4).

2. Method according to claim 1, wherein, if the first measure (M1) is executed, the method further comprises
- changing a setpoint for the wind turbine, particularly a rotor speed setpoint and/or a generator power setpoint, and/or
- changing a maximum allowed wind speed (WSmax1, WSmax2), and/or
- changing a maximum allowed external torque (T1, T2), and/or
- changing a remaining operation time of the wind turbine.

3. Method according to any one of the preceding claims, wherein
- in the first operation mode, M power modes for the operation of the wind turbine (100) are available, wherein M ≥ 2,
- if the first measure (M1) is executed, the method further comprises changing a power mode in which the wind turbine (100) is to be operated.

4. Method according to any one of the preceding claims, wherein
- the first measure (M1) is configured to cause an automatic change from the first to the second operation mode or
- the first measure (M1) is configured to indicate to an operator that the operation of the wind turbine (100) is to be changed from the first to the second operation mode.

5. Method according to any one of the preceding claims, wherein
- the first measure (M1) is configured to disable a power supply of the damaged drive (d6).

6. Method according to claim 5, wherein
- in the second operation mode, the damaged drive (d6) is kept at the same place as it would be in the first operation mode.

7. Method according to any one of claims 1 to 5, wherein
- in the second operation mode, the damaged drive (d6) is physically dismounted.

8. Method according to any one of the preceding claims, further comprising
- providing second information (I2) which is representative of whether an external torque (Me) acting on the rotatable component (1 to 4) exceeds a maximum allowed external torque (T1, T2), wherein
- the maximum allowed external torque (T2) in the second operation mode is lower than the maximum allowed external torque (T1) in the first operation mode,
and, if this is the case,
- executing a second measure (M2), wherein
- the second measure (M2) is configured to cause a change of an operation of the wind turbine (100) such that the external torque (Me) acting on the rotatable component (1 to 4) is reduced.

9. Method according to any one of the preceding claims, further comprising
- providing third information (I3) which is representative of whether a wind speed (WS) at the wind turbine (100) exceeds a maximum allowed wind speed (WSmax1, WSmax2), wherein
- the maximum allowed wind speed (WSmax2) in the second operation mode is smaller than the maximum allowed wind speed (WSmax1) in the first operation mode,
and, if this is the case,
- executing a third measure (M3), wherein
- the third measure (M3) is configured to cause a shutdown of the wind turbine (100).

10. Method according to claim 8 or claim 9 in its dependency on claim 8, wherein
- executing the second measure (M2) comprises changing a rotor speed setpoint and/or a generator power setpoint and/or a power mode.

11. Method according to any one of the preceding claims, comprising
- operating the wind turbine (100) in the first operation mode, and
- after executing the first measure (M1), operating the wind turbine (100) in the second operation mode.

12. Computer program comprising instructions which, when the program is executed by a control system, cause the control system to carry out the method of any one of claims 1 to 10.

13. Computer-readable data carrier having the computer program of claim 12 stored thereon.

14. Control system (30) comprising means for executing the method according to any one of claims 1 to 10.

15. Wind turbine (100) comprising
- a rotatable component (1 to 4),
- N drives (di) for rotating the rotatable component (1 to 4) by exerting torques, wherein N ≥ 2,
- the control system (30) according to claim 14.
